# EUROPÄISCHE PATENTSCHRIFT

(11) **EP 1 951 820 B1**
(45) Veröffentlichungstag und Bekanntmachung des Hinweises auf die Patenterteilung: **05.09.2012**
(21) Anmeldenummer: 06819418.2
(22) Anmeldetag: 13.11.2006
(51) Int. Cl.: C09B 67/00, C09B 67/26

(54) **FLÜSSIGFORMULIERUNGEN VON DIREKTFARBSTOFFEN**
LIQUID DIRECT DYE FORMULATIONS
COMPOSITIONS LIQUIDES DE COLORANTS DIRECTS

(30) Priorität: 18.11.2005 EP 05025196
(43) Veröffentlichungstag der Anmeldung: 06.08.2008
(73) Patentinhaber: BASF SE, 67056 Ludwigshafen (DE)
(72) Erfinder: KLOPP, Ingo, 67256 Weisenheim (DE); ETZBACH, Karl-Heinz, 67227 Frankenthal (DE); REICHELT, Helmut, 67435 Neustadt (DE)
(86) Internationale Anmeldenummer: PCT/EP2006/068376
(87) Internationale Veröffentlichungsnummer: WO 2007/057370

(56) Entgegenhaltungen:
- EP-A- 0 122 224
- EP-A- 0 182 743
- EP-A- 1 258 562
- EP-A- 1 548 069
- EP-A- 1 632 535
- WO-A-2004/048478

## Beschreibung

Die vorliegende Erfindung betrifft wässrige Flüssigformulierungen enthaltend
- 5-30 Gew.-%: einer Farbstoffzusammensetzung umfassend 25-85 Gew.-% Direct Brown 44 15-75 Gew.-% Direct Yellow 11 und/oder eines Farbstoffes erhältlich durch Reduktion oder thermische Behandlung von Direct Yellow 11 0-15 Gew.-% eines oder mehrerer blauen Direktfarbstoffe und 0-10 Gew.-% eines oder mehrerer roten Direktfarbstoffe jeweils bezogen auf die Farbstoffzusammensetzung
- 0,5-15 Gew.-%: eines oder mehrerer Alkylamine, deren ein, zwei oder drei Alkylreste jeweils durch ein oder zwei Hydroxylgruppen und/oder Aminogruppen substituiert und/oder durch ein oder zwei Sauerstoffatome in Etherfunktion unterbrochen sein können,
bezogen auf das Gesamtgewicht der wässrigen Flüssigformulierung, wobei der Natrium-Gehalt der Flüssigformulierung 0,3 Gew.-% nicht übersteigt, sowie ihre Verwendung zum Färben von Cellulosematerial insbesondere Papier.

Für die Herstellung von Verpackungsmaterial werden Braunfarbstoffe benötigt, die einen hellbraunen, nur in einem engen Bereich variierenden Farbton aufweisen. Das Braun kann dabei ein synthesebedingtes Farbstoffgemisch sein, wie im Fall von Basic Brown 1, oder eine Farbstoffmischung aus einem Gelbfarbstoff, einem Blaufarbstoff und gegebenenfalls einem Rotfarbstoff. Farbstoffmischungen haben den großen Vorteil, dass eine Nuancierung des Farbtons leichter möglich ist. Problematisch ist es jedoch, lagerstabile Flüssigformulierungen dieser Farbstoffmischungen zu erhalten.

Schlechte Lagerstabilität von Flüssigformulierungen resultiert aus der oftmals begrenzten Löslichkeit der Farbstoffe in Wasser, da diese wiederum meist mit einer erwünschten hohen Affinität zur Faser einhergeht. Während dies für die in der Papiermaschine vorliegenden Farbstoffkonzentrationen aufgrund der niedrigen Konzentration keine Auswirkung hat, kann es für die im Handel immer beliebteren Flüssigformulierungen große Auswirkungen haben. Oftmals ergeben sich Probleme mit der Lagerstabilität der Flüssigformulierung, wenn die Gebinde längere Zeit gelagert werden müssen. Dabei können sowohl Kälte wie auch Hitze zu Niederschlägen führen, die nicht nur kritisch für die Dosierpumpen sein können, sondern auch zur Stippenbildung oder ungleichmäßigen Färbungen des Papiers führen können. Noch problematischer wird die Lagerstabilität bei Farbstoffmischungen, da hier mehrere Farbstoffe gleichzeitig in Lösung gehalten werden müssen.

Um generell die Löslichkeit einer Farbstoffformulierung zu verbessern, werden in der Regel löslichkeitsverbessernde Zusätze gewählt, die oftmals auch als Gegenion der Farbstoffsäuren dienen. Als löslichkeitsverbessernde Zusätze sind die verschiedensten Stoffklassen bekannt wie Alkohole, Mono-, Oligo- oder Polyalkylenglykole, Lactame, Amine und Amide.

Die EP 1 258 562 beschreibt Braunmischungen enthaltend Direct Yellow 11 sowie andere Mischungen enthaltend Direct Brown 44.

Die GB-A 2 164 348 lehrt lagerstabile Flüssigformulierungen von Direct Yellow 11 durch seine Umsetzung mit Di- und Triethanolamin.

Der DE-A 30 46 450 ist die Herstellung von Direktgelb 11 aus 4-Nitrotoluol-2-sulfonsäure in Gegenwart von Ethanolamin und Lithiumhydroxid zu entnehmen. Anschließend wird die Mischung mit Harnstoff versetzt.

Die EP-A 1 548 069 beschreibt gelbe und braune lagerstabile wässrige Flüssigformulierungen aus verröteten Direct Yellow 11 sowie roten und blauen Direktfarbstoffen, die Ethanolamin und Harnstoff enthalten. Die darin beschriebenen Mischungen werden jedoch nicht mit Brauntönen abgetönt.

Die ältere europäische Patentanmeldung 05016961.4 lehrt die Lagerstabilisierung von anionischen Direktfarbstoffen mit Poly-N-vinylformamid und Polymeren des N-Vinylformamids. Die hier beschriebenen Braunmischungen sind zum Teil auch mit Direktbraun 44 abgetönt. Angaben zum Natriumgehalt werden jedoch nicht gemacht. Lagerungsversuche haben unbefriedigende Ergebnisse im Hinblick auf die Langzeitlagerstabilität ergeben, da diese Mischungen im Langzeittest strukturviskos sind.

Die WO-A 04/048478 lehrt die Herstellung einer salzarmen Flüssigformulierung von Direct Brown 44 ausgehend von m-Phenylendiamin zu Vesuvin und direkter Umsetzung zu Direct Brown 44 ohne Zwischenisolierung des Vesuvins. Das Direkt Brown 44 wird dabei in seiner Säureform isoliert und in wässrigen Basen gelöst.

Die ältere PCT-Anmeldung PCT/EP/05/005392 beschreibt die Herstellung von salzarmen Flüssigformulierungen von Direct Brown 44 mittels Nanofiltration.

Für die Herstellung von Verpackungsmaterial, war es nun das Ziel, dem jeweiligen Papierhersteller speziell für seinen Rohzellstoff fertig abgemischte Braunmischungen anzubieten. Das hat für ihn den Vorteil, dass er zum einen nicht selber mischen muss und zum anderen nur noch die eine Braunfarbstoffmischung lagern muss. Damit wurde die Lagerstabilität der braunen wässrigen Flüssigformulierungen zur zentralen Aufgabe der vorliegenden Erfindung.

Der vorliegenden Erfindung lag somit eine braune Flüssigformulierung als Aufgabe zugrunde, die eine verbesserte Lagerstabilität sowohl bei kalter wie auch bei warmer Lagerung aufweist.

Demgemäss wurden die obengenannten Flüssigformulierungen gefunden.

Die Gew.-% Angaben der Farbstoffe beziehen sich jeweils auf den Farbstoff berechnet in Form seiner freien Säure. Die Farbstoffe liegen in der Flüssigformulierung in Form ihrer Salze vor. Direct Yellow 11, die durch seine Umsetzung erhaltenen Farbstoffe sowie die roten und blauen Direktfarbstoffe haben bevorzugt als Gegenionen Lithiumionen sowie Alkylammoniumionen. Da der Flüssigformulierung nicht mehr zu entnehmen ist, ob es sich bei dem Alkylamin um Gegenionen oder Zusätze handelt, werde sie in ihrer Gesamtheit als Alkylamin in der Flüssigformulierung gerechnet.

Vesuvin und dessen Kupplungsprodukte wie C.I. Direct Brown 44 sind seit Anbeginn der Farbstoffchemie bekannt. So ist dem Colour Index zu entnehmen, dass formal zwei Teile Sulfanilsäure auf ein Teil Vesuvin (Bismarck Brown C.I. 21000) gekuppelt werden, um zu C.I. Direct Brown 44 zu gelangen. Ein Verfahren zu seiner Herstellung wird in der WO 04/048478 beschrieben, auf deren Lehre hiermit ausdrücklich Bezug genommen wird.

Bevorzugt wird Direct Brown 44, das erhalten wird, indem man Vesuvin aus m-Phenylendiamin herstellt und es ohne Zwischenisolierung zum Direct Brown 44 umsetzt. Das Vesuvin wird dabei auf allgemein bekannte Weise hergestellt, wie auch in der WO 04/048478 beschrieben, indem man formal einen von drei Teilen m-Phenylendiamin tetrazotiert und auf die restlichen zwei Teile kuppeln lässt. Anschließend kann zum Reaktionsgemisch direkt die diazotierte Sulfanilsäure dosiert werden.

Bevorzugt setzt man Direct Brown 44 als Flüssigformulierung ein, die man beispielsweise durch Isolierung der Säure von Direct Brown 44 und lösen in verdünnten Basen erhält. Die Isolierung in seiner Säureform geschieht, indem man die Reaktionsmischung der Kupplung von Sulfanilsäure auf Vesuvin nach erfolgter Kupplung auf einen pH-Wert im Bereich von 0 bis 4,5, bevorzugt von 0 bis 2 ansäuert. Dabei kann es vorteilhaft sein, wenn man die Säure von Direct Brown 44 bei Temperaturen von 20 bis 70 °C kristallisieren lässt. Man erhält so Direct Brown 44 als Feststoff, der auf allgemein übliche Weise wie Filtrieren oder Zentrifugieren isoliert werden kann. Vorzugsweise wäscht man den erhaltenen Farbstoff mit Wasser, bis die Leitfähigkeit des Waschwassers ≤ 1 mS (milli Siemens) ist. Direct Brown 44 als Säure wird anschließend in verdünnten Basen gelöst. Je nach Wahl der Base erhält man das entsprechende Salz des Farbstoffs.

Geeignet sind Basen, deren Kationen als Gegenionen die Farbstoffe in Lösung halten, wie Ammoniakwasser oder wässrige Lösungen substituierter Amine wie Monoalkyl-, Dialkyl- oder Trialkylamine, Tetraalkylammonium- oder Benzyltrialkylammoniumhydroxyde oder solche Amine, die sich von stickstoffhaltigen fünf- oder sechsgliedrigen gesättigten Heterocyclen ableiten, wie Pyrrolidin, Piperidin, Morpholin oder Piperazin oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch ein oder zwei Hydroxylgruppen substituiert und/oder durch ein bis vier Sauerstoffatome in Etherfunktion unterbrochen sein kann. Bevorzugte Basen sind C₁-C₄-Alkanolamine, insbesondere Monoethanol-, Diethanol- und Triethanolamin.

Bevorzugt löst man den Farbstoff mit Ammoniakwasser im Gemisch mit einem Alkylamin, dessen Alkylrest durch ein oder zwei Hydroxylgruppen und/oder Aminogruppen substituiert und/oder durch ein oder zwei Sauerstoffatome in Etherfunktion unterbrochen sein kann. Besonders bevorzugt wird Ammoniakwasser im Gemisch mit einem Monoalkanol-, Dialkanol- und/oder Trialkanolamine, da diese besonders stabile Flüssigformulierungen geben. Unter Alkyl ist dabei bevorzugt geradkettiges oder verzweigtes C₁-C₄-Alkyl zu verstehen. Insbesondere wird Ammoniakwasser in Kombination mit Mono-, Di- und/oder Triethanolamin bevorzugt. Ammoniakwasser ist eine 20 - 30 gew.-%ige Lösung von Ammoniak in Wasser.

Nach einer weiteren bevorzugten Ausführungsform wird der Farbstoff nur in dem Alkylamin gelöst.

Zum Neutralisieren und damit Lösen des Farbstoffes werden 0 -2 Mol Ammoniakwasser pro Mol Farbstoff eingesetzt. Zum Lösen des gegebenenfalls restlichen Farbstoffs, wird als Base Alkylamin gewählt. Darüber hinaus kann es vorteilhaft sein, bis zu 3 Moläquivalente Alkylamin zur Verbesserung der Stabilität der Flüssigeinstellung zusätzlich zuzugegeben. Bevorzugt stellt man den pH-Wert auf einen Wert im Bereich von 8,5 - 11 ein.

Bevorzugt wird Direct Brown 44 als Flüssigformulierung eingesetzt mit einem Natrium-gehalt ≤ 1,5 Gew.-%, besonders bevorzugt ≤ 0,7 Gew.-% bezogen auf Direct Brown 44 als Feststoff.

Nach einer weiteren bevorzugten Ausführungsform wird Direct Brown 44 eingesetzt, das erhalten wird durch Kuppeln einer wenigstens äquimolaren Menge von diazotierter Sulfanilsäure auf das Kupplungsprodukt von Phenylendiamin auf sich selbst, indem man das gebildete Direct Brown 44 im Basischen löst und anschließend eine Nanofiltration durchführt. Die Farbstoffe fallen unter Kupplungsbedingungen als Feststoffe an, so dass man eine wässrige Suspension erhält. Unter im Basischen lösen ist zu verstehen, dass man den Azofarbstoff löst, indem man den pH-Wert des Reaktionsgemisches basisch, also auf einen pH-Wert im Bereich von 8 bis 14 stellt. Zum Lösen von Direct Brown 44 sind die oben aufgeführten Basen mit denselben Bevorzugungen geeignet.

Die sich ggf. anschließende Nanofiltration dient dem Entsalzen und gegebenenfalls Aufkonzentrieren der Farbstofflösung. Als bevorzugte Membranen in der eingesetzten Membrantrenneinheit werden kommerziell verfügbare Nanofiltrationsmembranen mit Trenngrenzen von 200 Dalton bis 2 000 Dalton, besonders bevorzugt 200 Dalton bis 1000 Dalton, verwendet. Die Transmembrandrücke betragen 1 bis 50 bar bei Temperaturen bis 100°C. Die für die Nanofiltration geeigneten Membranen sind in der PCT/EP/05/005392 beschrieben, auf die ausdrücklich Bezug genommen wird.

In der Regel erhält man durch das Lösen des Farbstoffs im Basischen eine Farbstofflösung, deren Farbstoffgehalt 3 bis 10 Gew.-% beträgt. Eine solche Lösung kann direkt mittels Nanofiltration entsalzt und gegebenfalls aufkonzentriert werden.

Es wird soweit entsalzt, bis der Natriumgehalt in der Flüssigformulierung ≤ 1,5 Gew.-%, besonders bevorzugt ≤ 0,7 Gew.-% bezogen auf Direct Brown 44 als Feststoff ist.

Bevorzugt wird ein Teil des abgezogenen Permeats wie bei einer Diafiltration durch eine wässrige Lösung der oben genannten Basen ersetzt, um den pH-Wert konstant zu halten. Diese Vorgehensweise ist in der PCT/EP/05/005392 beschrieben, auf deren Offenbarung ausdrücklich Bezug genommen wird.

Direct Yellow 11 wird als Produkt der Selbstkondensation von 5-Nitro-o-toluolsulfonsäure in wässrig alkalischem Medium erhalten. Seine Umsetzung mit Reduktionsmitteln wie Glucose oder Natriumsulfid führt zu Direct Orange 15 (C.I. 40002 bzw. 40003). Diese Farbstoffe sind Mischungen von Farbstoffen unbestimmter Konstitution. Reduziert man Direct Yellow 11 unterstöchiometrisch in Bezug auf die Nitrotoluolsulfonsäure, so erhält man Farbstoffgemische mit einem gelborangen Farbton. Man bezeichnet diese bathochrome Verschiebung des Farbtons auch als "Verrötung" von Direct Yellow 11. Eine solche Verrötung des Farbtons lässt sich auch durch thermische Behandlung von Direct Yellow 11 erreichen. Unter teilverröteten Direct Yellow 11 sind im folgenden Farbstoffe zu verstehen, die erhältlich sind durch Reduktion oder thermische Behandlung von Direct Yellow 11 und deren Bunttonwinkel auf gebleichtem Zellstoff im Farbraum im Bereich von 55 bis 75 liegt. Die Herstellung dieser teilverröteten Direct Yellow 11 Farbstoff ist in der EP-A 1 548 069 beschrieben, auf deren Inhalt hiermit ausdrücklich Bezug genommen wird.

Bevorzugt werden Farbstoffzusammensetzungen mit Direct Yellow 11.

Die Herstellung von Direct Yellow 11 ist allgemein bekannt. Direct Yellow 11 wird durch Erwärmen einer alkalischen wässrigen Lösung von 5-Nitro-o-toluolsulfonsäure erhalten. Durch die Umsetzung der Nitrotoluolsulfonsäure mit einem Alkalihydroxid wie beispielsweise Lithiumhydroxid bildet sich zuerst das Salz der Nitrotoluolsulfonsäure, welches im Basischen beim Erwärmen auf 40 - 80°C zum Azostilbenfarbstoff kondensiert.

Bevorzugt setzt man der Mischung vor der Kondensation noch ein Alkanolamin, in einer Menge von 0,1 bis 0,5 Mol Alkanolamin pro Mol Nitrotoluolsulfonsäure zu. Alkanolamine sind beispielsweise Ethanolamin, Isopropanolamin oder bevorzugt Diethanolamin. Vermutlich wirkt ein solcher Zusatz lösungsvermittelnd auf Reaktionszwischenstufen.

Nach erfolgter Kondensation und Abkühlen wird das alkalische Gemisch beispielsweise mit Essigsäure auf pH-Werte im Bereich von 7 bis 9 gestellt.

Nach einer weiteren bevorzugten Ausführungsform wird Direct Yellow 11 als Diethanolamin-Salz, wie es in der EP-A-0 122 224 beschrieben ist, auf die ausdrücklich Bezug genommen wird, gewählt.

Der rote bzw. blaue Direktfarbstoff ist jeweils ein anionischer direktziehender Farbstoff. Unter Blau ist dabei ein Absorptionsmaximum im Wellenlärigenbereich von 560 bis 650 nm zu verstehen. Unter Rot ist ein Absorptionsmaximum im Wellenlängenbereich von 490 bis 540 nm zu verstehen.

Bevorzugt werden blaue Direktfarbstoffe wie Direct Violet 9 (C.I. 27855), Direct Violet 35, Direct Violet 51 (C.I. 27905), Direct Blue 86 (C.I. 74180), Direct Blue 199 (C.I. 74190), Direct Blue 218 (C.I. 24401), Direct Blue 267, Direct Blue 273, Direct Blue 279, Direct Blue 281, Direct Blue 71, 273 als Kupferkomplex, und 290. Insbesonders werden Direct Blue 15, 71, 273, 279, 281, 290 und die Farbstoffe der Formeln I, II und III bevorzugt.

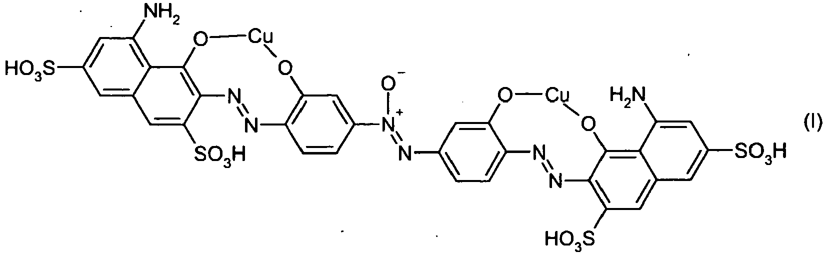

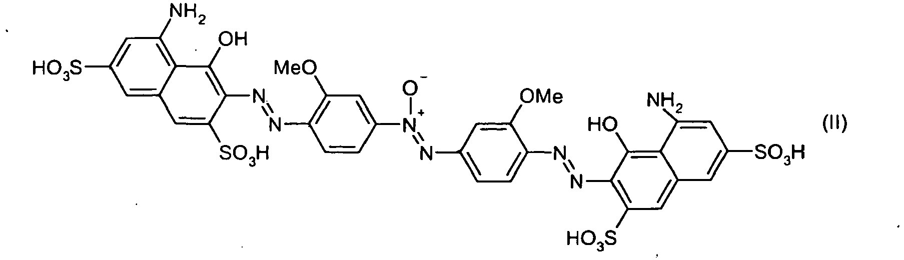

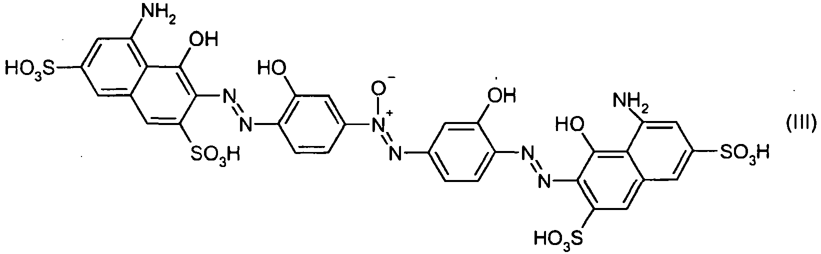

Ebenfalls bevorzugt werden rote Direktfarbstoffe wie Direct Red 80, Direct Red 81 (C.I. 28160), Direct Red 239, Direct Red 252-255 und Direct Red 262.

Bevorzugt werden wässrige Flüssigformulierungen, deren Farbstoffzusammensetzung aus
- 25-85 Gew.-%: Direct Brown 44
- 15-75 Gew.-%: Direct Yellow 11
- 0-15 Gew.-%: eines oder mehrerer blauen Direktfarbstoffe und
- 0-10 Gew.-%: eines oder mehrer roten Direktfarbstoffe
jeweils bezogen auf die Farbstoffzusammensetzung, besteht.

Besonders bevorzugt werden wässrige Flüssigformulierungen, deren Farbstoffzusammensetzung aus
- 30-80 Gew.-%: Direct Brown 44
- 20-70 Gew.-%: Direct Yellow 11
- 0-15 Gew.-%: eines oder mehrerer blauen Direktfarbstoffe und
- 0-10 Gew.-%: eines oder mehrerer roten Direktfarbstoffe
jeweils bezogen auf die Farbstoffzusammensetzung, besteht.

Ganz besonders bevorzugt werden wässrige Flüssigformulierungen, deren Farbstoffzusammensetzung aus
- 30 -80 Gew.-%: Direct Brown 44
- 20-70 Gew.-%: Direct Yellow 11
- 0-15 Gew.-%: eines oder mehrerer blauen Direktfarbstoffe bevorzugt ausgewählt unter Direct Blue 15, 71, 273, 279, 281, 290 und die Farbstoffe der Formeln I, II und III
jeweils bezogen auf die Farbstoffzusammensetzung, besteht.

Erfindungsgemäß enthält die wässrige Flüssigformulierung wenigstens ein Alkylamin, dessen ein, zwei oder drei Alkylreste jeweils durch ein oder zwei Hydroxylgruppen und/oder Aminogruppen substituiert und/oder durch ein oder zwei Sauerstoffatome in Etherfunktion unterbrochen sein können, in einer Menge von 0,5 - 15 Gew.-% bezogen auf das Gesamtgewicht der Flüssigformulierung. Bevorzugt werden Alkylamine, deren zwei oder drei Alkylreste jeweils durch ein oder zwei Hydroxylgruppen substituiert und/oder durch ein oder zwei Sauerstoffatome in Etherfunktion unterbrochen sein können. Besonders bevorzugt werden Mono-, Di- und Trialkanolamine.

Bevorzugte Alkylamine sind Ethanolamin, Diethanolamin, Triethanolamin, Dimethylethanolamin, N-Methyldiethanolamin, Monomethylethanolamin, 2-(2-Aminoethoxy)ethanol, Aminoethylethanolamin. Besonders bevorzugt werden Ethanolamin insbesondere Diethanolamin und Triethanolamin.

Bevorzugt werden wässrige Flüssigformulierungen umfassend 5- 30 Gew.-%, bevorzugt 10-30 Gew.-% Farbstoffzusammensetzung und 0,5 bis 10 Gew.-% insbesondere 0,5 bis 8 Gew.-% eines oder mehrerer Alkylamine bezogen auf das Gesamtgewicht der Flüssigformulierung.

Die Farbstoffe können als Flüssigformulierung, als feuchter Presskuchen oder auch in getrockneter Form eingesetzt werden. In den beiden letzten Fällen stellt man eine Lösung her, indem man das Alkylamin zusetzt. Synthesebedingt kann, wie oben erwähnt, ein Teil des in der Flüssigformulierung enthaltenen Alkylamins bei der Herstellung des Direct Yellow 11 zugegeben werden. Es ist lediglich darauf zu achten, dass die Gesamtmenge von 15 Gew.-% an Alkylamin in der Flüssigformulierung nicht überschritten wird.

Erfindungsgemäß darf der Natrium-Gehalt der Flüssigformulierung 0,3 Gew.-% nicht übersteigen. Bevorzugt wird ein Natrium-Gehalt von ≤ 0,25 Gew.-%, insbesondere von ≤ 0,2 Gew.-%. In der Regel wird der Natrium-Gehalt der Flüssigformulierung durch eingesetztes Direct Brown 44, in der Regel als Flüssigformulierung, hervorgerufen.

Daher ist es vorteilhaft, Flüssigformulierungen von Direct Brown 44 zu wählen, die nach den oben geschilderten Herstellverfahren synthetisiert wurden.

Weitere Zusätze in der Flüssigformulierung können prinzipiell sein C₁-C₄-Alkanole, z.B. Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Ketone oder Ketoalkohole, wie Aceton, Methylethylketon oder 2-Methyl-2-hydroxypentan-4-on, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2-oder 1,4-Butylenglykol, Hexan-1,6-diol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie Ethylenglykolmonomethyl- oder -monoethylether, Diethylenglykolmonomethyl- oder - monoethylether, Diethylenglykolmonobutylether (Butyldiglykol) oder Triethylenglykolmonomethyl- oder -monoethylether, C₁-C₄-Alkylester von mehrwertigen Alkoholen, γ-Butyrolacton oder Dimethylsulfoxid. Geeignete solubilisierende Zusätze sind ferner Lactame, wie -Caprolactam, Pyrrolidin-2-on oder N-Methylpyrrolidin-2-on, cyclische Harnstoffe, wie 1,3-Dimethylimidazolidin-2-on oder 1,3-Dimethylhexahydropyrimid-2-on sowie Polyacrylsäuren, Polyacrylsäurederivate, Polyvinylacetate, Polyvinylalkohole, Polyvinylpyrrolidone, Polysiloxane oder Copolymere der jeweiligen Monomere. Desgleichen können Oligomere des Ethylenoxids oder Propylenoxids oder Derivate dieser Oligomere zur Anwendung kommen.

Bevorzugt werden Flüssigformulierungen, die kein Poly-N-vinylformamid und/oder kein Polymer, das erhalten wird durch Polymerisation einer Mischung aus einem oder mehreren ethylenisch ungesättigten Monomere und > 50 Gew.-% N-Vinylformamid bezogen auf die Gesamtmonomere, enthalten. Unter Poly-N-vinylformamid ist im Rahmen dieser Anmeldung ein Polymer mit einem mittleren Molekulargewicht (stat. Lichtstreuung) im Bereich von ≤ 340 000. Es wird erhalten durch radikalische Polymerisation von Vinylformamid wie in der DE-A 31 28 478 beschrieben. Bedingt durch seine Herstellung sowie durch die wässrige Flüssigformulierung lässt sich die Hydrolyse der Amidgruppe zur Amingruppe nicht vollständig vermeiden. Unter Polyvinylformamid ist daher im Rahmen dieser Anmeldung ein Polymer zu verstehen, das bis zu 20 Mol-% hydrolysierte Gruppen enthält. Der Hydrolysegrad lässt sich einfach mittels Polyelektrolyttitration bestimmen. Als ethylenisch ungesättigte Comonomere sind beispielsweise zu nennen Vinylformiat, Vinylacetat, Vinylpropionat, Acrylnitril, N-Vinylcaprolactam, N-Vinylharnstoff, N-Vinylpyrrolidon, C₁- bis C₆-Alkylvinylether, N-Vinylacetamid, Methylacrylat und Methylmethacrylat.

Besonders bevorzugt werden erfindungsgemäße wässrige Flüssigformulierungen umfassend
- 15-30 Gew.-%: der Farbstoffzusammensetzung,
- 0,5-8 Gew.-%: Mono-, Di- und/oder Triethanolamin, bevorzugt Di- und/oder Triethanolamin.

Besonders bevorzugt werden erfindungsgemäße wässrige Flüssigformulierungen bestehend aus
- 15-30 Gew.-%: der Farbstoffzusammensetzung,
- 0,5-8 Gew.-%: Mono-, Di- und/oder Triethanolamin, bevorzugt Di- und/oder Triethanolamin.

Die erhaltenen Flüssigfomulierungen ergeben in allen Mischungsverhältnissen von Direkt Brown 44 mit Direkt Yellow 11 stabile Mischungen sowohl mit wie auch ohne Zusatz einer Blaukomponente und/oder gegebenenfalls Rotkomponente und ermöglichen somit ein weites coloristische Spektrum an Brauntönen. Die erhaltenen Lösungen weisen hervorragende Lagerstabilität auf und sind nicht strukturviskos. Sie ergeben gute Papier - und Kartonfärbungen insbesondere in der Masse.

Die nachfolgenden Beispiele sollen die Erfindung näher erläutern.

### a) Herstellung von Direct Yellow 11 (DY 11)

Es wurden 1,5 I Wasser vorgelegt und 1,10 kg 5-Nitro-o-toluolsulfonsäure (83 gew.-%ig, 33,5 mol) eingetragen. Anschließend wurden insgesamt 278 g festes Lithiumhydroxid (56 gew.-%ig) portionsweise zugesetzt. Man gab 67 g Diethanolamin zu und rührte 20 Stunden bei 50 - 60° C und danach 5 Stunden bei 58°C. Danach wurden 1,7 Liter Wasser zugegeben und mit Eisessig ein pH-Wert von 9,0 eingestellt. Mit 1,85 kg Harnstoff wurde der gelartige Farbstoff gelöst und mit Wasser die Endfarbstärke eingestellt. Es wurden 7,26 kg Produkt erhalten mit einem Farbstoffgehalt von ca. 12 Gew.-%.

### b) Herstellung von Direct Brown 44 (DB 44)

### Stufe 1:

Es wurden 28,12 g m-Phenylendiamin und 8,76 g 20 gew.-%ige Salzsäure in 344 ml Wasser eingetragen. Dazu gab man 338 g Eis. Dann wurden 15,04 g Natriumnitrit eingetragen und innerhalb 50 Minuten 78,86 g 20 gew.-%ige Salzsäure bei einer Temperatur < 3 °C zugetropft. Nach 10 Minuten wurden noch 1,73 g m-Phenylendiamin nachgegeben und mit 13 g Natronlauge (25 gew.-%ig) ein pH Wert von 3 eingestellt. Danach wurde 1 Stunde bei 3°C nachgerührt.

### Stufe 2:

Zu einer Lösung aus 34,6 g Sulfanilsäure in 273,46 g Wasser und 32,4 g Natronlauge (25 gew.-%ig) wurden 279 g Eis und 68,9 g Natriumnitrit zugegeben. Dazu ließ man 82,76 g Salzsäure (20 gew.-%ig) bei 0-5°C zulaufen und 30 Minuten nachrühren.

Die Stufe 2 wurde innerhalb 90 Minuten mit der Stufe 1 bei 20°C vereinigt. Der pH-Wert wurde dabei mit Natronlauge (25 gew.-%ig) bei pH 5 gehalten. Nach 3 Stunden bei 20°C wird der pH-Wert auf 7,5 gestellt und dann der Ansatz auf 55-60° C erwärmt. Mit Salzsäure (20 gew.-%ig) wurde der pH-Wert auf 1 gestellt, der Feststoff abgesaugt und mit Wasser gewaschen. Man erhielt ca. 300 g eines feuchten Presskuchens von Direct Brown 44 dessen Trockengehalt 22 Gew.-% betrug (Na-Gehalt: < 0,5 % in der Trockenmasse).

### c) Herstellung einer Flüssigformulierung von Direct Brown 44 (B1)

80,33 g des feuchten Presskuchens (entsprechend 20,0 g trocken) wurden mit 5,25 g Diethanolamin, 3,44 g Ammonmiakwasser (25%ig), 5 g eines Polyethylenglykols (mittleres Molgewicht: 200) und Wasser zu 100g Flüssigfarbstoff aufgelöst.

Aus den in Tabelle 1 angegebenen Direct Brown 44 Flüssigformulierungen (B1-B9, sowie den Vergleichseinstellungen V1 und V2), dem nach Beispiel a) hergestellten Direct Yellow 11 und Direct Blue 279 wurden durch Mischen die in der Tabelle 2 aufgeführten Flüssigformulierungen hergestellt. Die Einzelfarbstoffe sind in Gew.-Teilen Farbstoff (als Feststoff) bezogen auf die Gesamtfarbstoffzusammensetzung angegeben. Die %-Angaben sind, sofern nicht anders angegeben, Gew.-%-Angaben und beziehen sich auf die Füssigformulierung.

Die Lagerstabilität dieser erfindungsgemäßen Flüssigformulierungen der Beispiele 1-16 und der Vergleichsbeispiele V1-V3 wurde nach 5 Wochen visuell beurteilt.

Note 0 keine Abscheidungen, Note 1: sehr wenig Abscheidungen, Note 2: merkliche Ausfällungen, Note 3: starke Ausfällungen.

**Tabelle 1: Flüssigformulierungen von Direktbraun 44**

| Formulierung | NaOH 50%ig [g] | Diethanolamin DEA [g] | Triethanolamin TEA [g] | Ethanolamin EA [g] | Ammoniakwasser 25 %ig [g] | Polyethylenglykol PEG 200 [g] | PH |
|---|---|---|---|---|---|---|---|
| B1 | | 5,25 | | | 3,44 | 5 | 9,8 |
| B2 | | | 7,46 | | 3,44 | 5 | 9,1 |
| B3 | | | 6,78 | | 1,74 | 5 | 8,4 |
| B4 | | | | 2,78 | 1,74 | 5 | 9,7 |
| B5 | | | 7,54 | | 3,44 | 0 | 9,1 |
| B6 | | 1,77 | | | 3,44 | 0 | 9,1 |
| B7 | | | 4,19 | | 3,44 | 0 | 8,7 |
| B8 | | | | 3,09 | 3,44 | 0 | 10,0 |
| B9 | | | | 1,03 | 3,44 | 0 | 9,0 |
| V1 | 4,04 | | 7,46 | | | 5 | 12,0 |
| V2 | 2,02 | | 7,46 | | | 5 | 9,5 |

| | | | | | | | |
|---|---|---|---|---|---|---|---|
| PEG 200 ist ein Polyethylenglykol mit einem mittleren Molekulargewicht von 200 g/mol. | | | | | | | |

**Tabelle 2:**

| Bsp. | DB44 | DB44 Gew.-T | DY 11 Gew.-T | D.Blue 279 Gew.-T | Farbstoff gesamt [%] | EA [%] | DEA [%] | TEA [%] | NH3 [%] | PEG200 [%] | Na [%] | Lagerstabilität | |
|---|---|---|---|---|---|---|---|---|---|---|---|---|---|
| | | | | | | | | | | | | 4°C | 50°C |
| 1 | B1 | 58,8 | 41,2 | 0,0 | 16,0 | - | 3,13 | - | 0,43 | 2,50 | 0,10 | 1 | 1 |
| 2 | B2 | 74,4 | 25,6 | 0,0 | 17,4 | - | 0,33 | 4,97 | 0,58 | 3,35 | 0,11 | 1 | 1 |
| 3 | B2 | 64,9 | 22,4 | 12,8 | 18,4 | - | 0,31 | 4,62 | 0,54 | 3,10 | 0,14 | 1 | 1 |
| 4 | B3 | 50,9 | 35,6 | 13,4 | 17,0 | - | 0,46 | 3,14 | 0,20 | 2,31 | 0,11 | 1 | 1 |
| 5 | B3 | 64,9 | 22,4 | 12,8 | 18,4 | - | 0,31 | 4,21 | 0,27 | 3,10 | 0,14 | 1 | 1 |
| 6 | B4 | 58,8 | 41,2 | 0,0 | 16,0 | 1,39 | 0,50 | - | 0,22 | 2,50 | 0,10 | 1 | 1 |
| 7 | B4 | 64,9 | 22,4 | 12,8 | 18,4 | 1,86 | 0,31 | - | 0,27 | 2,31 | 0,14 | 1 | 1 |
| 8 | B5 | 35,4 | 50,4 | 14,2 | 15,64 | - | 0,62 | 2,30 | 0,26 | 0,00 | 0,13 | 1 | 1 |
| 9 | B5 | 64,9 | 22,4 | 12,8 | 18,4 | - | 0,31 | 4,67 | 0,53 | 0,00 | 0,14 | 1 | 1 |
| 10 | B6 | 58,8 | 41,2 | 0,0 | 16,0 | - | 1,39 | - | 0,43 | 0,00 | 0,10 | 1 | 1 |
| 11 | B6 | 35,4 | 50,4 | 14,2 | 15,64 | - | 1,16 | - | 0,26 | 0,00 | 0,13 | 1 | 1 |
| 12 | B7 | 74,4 | 25,6 | 0,0 | 17,4 | - | 0,33 | 2,80 | 0,58 | 0,00 | 0,11 | 1 | 1 |
| 13 | B7 | 50,9 | 35,6 | 13,4 | 17,0 | - | 0,50 | 1,94 | 0,40 | 0,00 | 0,11 | 1 | 1 |
| 14 | B8 | 58,8 | 41,2 | 0,0 | 16,0 | 1,54 | 0,50 | - | 0,43 | 0,00 | 0,10 | 1 | 1 |
| 15 | B8 | 50,9 | 35,6 | 13,4 | 17,0 | 1,42 | 0,47 | - | 0,40 | 0,00 | 0,11 | 1 | 1 |
| 16 | B9 | 58,8 | 41,2 | 0,0 | 16,0 | 0,52 | 0,50 | - | 0,43 | 0,00 | 0,10 | 1 | 1 |
| 17 | B9 | 35,4 | 50,4 | 14,2 | 15,64 | 0,34 | 0,67 | - | 0,26 | 0,00 | 0,13 | 1 | 1 |
| VV1 | V1 | 58,8 | 41,2 | 0,0 | 16,0 | - | 0,50 | 3,73 | - | 2,50 | 0,58 | 2 | 3 |
| VV2 | V1 | 50,9 | 35,6 | 13,4 | 17,0 | - | 0,50 | 3,45 | - | 2,31 | 0,54 | 3 | 3 |
| VV3 | V2 | 74,4 | 25,6 | 0,00 | 18,4 | - | 0,33 | 5,0 | - | 3,35 | 0,79 | 2 | 2 |

## Patentansprüche

1. Wässrige Flüssigformulierung enthaltend
5-30 Gew.-% einer Farbstoffzusammensetzung umfassend
25-85 Gew.-% Direct Brown 44
15-75 Gew.-% Direct Yellow 11 und/oder eines Farbstoffes erhältlich durch Reduktion oder thermische Behandlung von Direct Yellow 11
0-15 Gew.-% eines oder mehrerer blauen Direktfarbstoffe und 0-10 Gew.-% eines oder mehrerer roten Direktfarbstoffe jeweils bezogen auf die Farbstoffzusammensetzung
0,5-15 Gew.-% eines oder mehrerer Alkylamine, deren ein, zwei oder drei Alkylreste jeweils durch ein oder zwei Hydroxylgruppen und/oder Aminogruppen substituiert und/oder durch ein oder zwei Sauerstoffatome in Etherfunktion unterbrochen sein können,
bezogen auf das Gesamtgewicht der wässrigen Flüssigformulierung, wobei der Na-Gehalt der Flüssigformulierung 0,3 Gew.-% nicht übersteigt.

2. Wässrige Flüssigformulierung nach Anspruch 1, deren Farbstoffzusammensetzung aus
25-85 Gew.-% Direct Brown 44
15-75 Gew.-% Direct Yellow 11
0-15 Gew.-% eines oder mehrerer blauen Direktfarbstoffe und
0-10 Gew.-% eines oder mehrerer roten Direktfarbstoffe
jeweils bezogen auf die Farbstoffzusammensetzung, besteht.

3. Wässrige Flüssigformulierung nach Anspruch 1 oder 2, deren Farbstoffzusammensetzung aus
30-80 Gew.-% Direct Brown 44
20-70 Gew.-% Direct Yellow 11
0-15 Gew.-% eines oder mehrerer blauen Direktfarbstoffe und
0-10 Gew.-% eines oder mehrerer roten Direktfarbstoffe
jeweils bezogen auf die Farbstoffzusammensetzung, besteht.

4. Wässrige Flüssigformulierung nach einem der Ansprüche 1 bis 3, wobei das Alkylamin auswählt wird aus der Gruppe umfassend Ethanolamin, Diethanolamin, Triethanolamin, Dimethylethanolamin, N-Methyldiethanolamin, Monomethylethanolamin, 2-(2-Aminoethoxy)ethanol und Aminoethylethanolamin.

5. Wässrige Flüssigformulierung nach einem der Ansprüche 1 bis 4, wobei die Menge des Alkylamins 0,5-10 Gew.-% bezogen auf das Gesamtgewicht der Flüssigformulierung beträgt.

6. Wässrige Flüssigformulierung nach einem der Ansprüche 1 bis 5, wobei der Na-Gehalt der Flüssigformulierung ≤ 0,25 Gew.-% beträgt.

7. Wässrige Flüssigformulierung nach einem der Ansprüche 1 bis 6 umfassend
15-30 Gew.-% Farbstoffzusammensetzung
0,5-8 Gew.-% Mono-, Di- und/oder Triethanolamin.

8. Verwendung der wässrigen Flüssigformulierung gemäß den Ansprüchen 1-7 zum Färben von Papier und Karton.

## Claims

1. An aqueous liquid formulation comprising
5-30% by weight of a dye composition comprising
25-85% by weight of Direct Brown 44
15-75% by weight of Direct Yellow 11 and/or of a dye obtainable by reduction or thermal treatment of Direct Yellow 11
0-15% by weight of one or more blue direct dyes and
0-10% by weight of one or more red direct dyes all based on the dye composition
0.5-15% by weight of one or more alkylamines whose one, two or three alkyl radicals may each be substituted by one or two hydroxyl groups and/or amino groups and/or interrupted by one or two oxygen atoms in ether function,
based on the total weight of the aqueous liquid formulation, the sodium content of the liquid formulation not exceeding 0.3% by weight.

2. The aqueous liquid formulation according to claim 1 whose dye composition consists of
25-85% by weight of Direct Brown 44
15-75% by weight of Direct Yellow 11
0-15% by weight of one or more blue direct dyes and
0-10% by weight of one or more red direct dyes
all based on the dye composition.

3. The aqueous liquid formulation according to claim 1 or 2 whose dye composition
consists of
30-80% by weight of Direct Brown 44
20-70% by weight of Direct Yellow 11
0-15% by weight of one or more blue direct dyes and
0-10% by weight of one or more red direct dyes
all based on the dye composition.

4. The aqueous liquid formulation according to any one of claims 1 to 3 wherein the alkylamine is selected from the group comprising ethanolamine, diethanolamine, triethanolamine, dimethylethanolamine, N-methyldiethanolamine, monomethylethanolamine, 2-(2-aminoethoxy)ethanol and aminoethylethanolamine.

5. The aqueous liquid formulation according to any one of claims 1 to 4 wherein the amount of the alkylamine is 0.5-10% by weight based on the total weight of the liquid formulation.

6. The aqueous liquid formulation according to any one of claims 1 to 5 whose sodium content is ≤ 0.25% by weight.

7. The aqueous liquid formulation according to any one of claims 1 to 6 that comprises
15-30% by weight of dye composition
0.5-8% by weight of mono-, di- and/or triethanolamine.

8. The use of the aqueous liquid formulation according to claims 1-7 for dyeing paper and board.

## Revendications

1. Formulation liquide aqueuse contenant
5-30 % en poids d'une composition de colorants comprenant
25-85 % en poids de Direct Brown 44
15-75 % en poids de Direct Yellow 11 et/ou d'un colorant pouvant être obtenu par réduction ou traitement thermique de Direct Yellow 11
0-15 % en poids d'un ou plusieurs colorants directs bleus et
0-10 % en poids d'un ou plusieurs colorants directs rouges
chaque fois par rapport à la composition de colorants
0,5-15 % en poids d'une ou plusieurs alkylamines, dont un, deux ou trois radicaux alkyle peuvent être substitués chacun par un ou deux groupes hydroxy et/ou groupes amino et/ou interrompus par un ou deux atomes d'oxygène en fonction éther,
par rapport au poids total de la composition liquide aqueuse, la teneur en Na de la formulation liquide n'excédant pas 0,3 % en poids.

2. Formulation liquide aqueuse selon la revendication 1, dont la composition de colorants consiste en
25-85 % en poids de Direct Brown 44
15-75 % en poids de Direct Yellow 11
0-15 % en poids d'un ou plusieurs colorants directs bleus et
0-10 % en poids d'un ou plusieurs colorants directs rouges
chaque fois par rapport à la composition de colorants.

3. Formulation liquide aqueuse selon la revendication 1 ou 2, dont la composition de colorants consiste en
30-80 % en poids de Direct Brown 44
20-70 % en poids de Direct Yellow 11
0-15 % en poids d'un ou plusieurs colorants directs bleus et
0-10 % en poids d'un ou plusieurs colorants directs rouges
chaque fois par rapport à la composition de colorants.

4. Formulation liquide aqueuse selon l'une quelconque des revendications 1 à 3, dans laquelle l'alkylamine est choisie dans le groupe comprenant l'éthanolamine, la diéthanolamine, la triéthanolamine, la diméthyléthanolamine, la N-méthyldiéthanolamine, la monométhyléthanolamine, le 2-(2-aminoéthoxy)éthanol et l'aminoéthyléthanolamine.

5. Formulation liquide aqueuse selon l'une quelconque des revendications 1 à 4, dans laquelle la quantité de l'alkylamine vaut 0,5-10 % en poids par rapport au poids total de la formulation liquide.

6. Formulation liquide aqueuse selon l'une quelconque des revendications 1 à 5, dans laquelle la teneur en Na de la formulation liquide vaut ≤ 0,25 % en poids.

7. Formulation liquide aqueuse selon l'une quelconque des revendications 1 à 6, comprenant
15-30 % en poids de composition de colorants
0,5-8 % en poids de mono-, di- et/ou triéthanolamine.

8. Utilisation de la formulation liquide aqueuse selon les revendications 1 à 7, pour la coloration du papier et du carton.
